# FASCICULE DE BREVET EUROPEEN

(11) **EP 0 493 142 B1**
(45) Date de publication et mention de la délivrance du brevet: **15.03.1995**
(21) Numéro de dépôt: 91403099.4
(22) Date de dépôt: 18.11.1991
(51) Int. Cl.: G21C 17/022, G01K 13/02

(54) **Procédé et dispositif de mesure de la température du fluide de refroidissement primaire d'un réacteur nucléaire**
Verfahren und Vorrichtung zur Temperaturmessung des primären Kühlmittels eines Kernreaktors
Method and device for measuring the primary coolant temperature of a nuclear reactor

(30) Priorité: 28.12.1990 FR 9016493
(43) Date de publication de la demande: 01.07.1992
(73) Titulaire: FRAMATOME, 92400 Courbevoie (FR)
(72) Inventeur: Bourgeon, Claude, F-38460 Cremieu (FR); Tardy, Emmanuel, F-69001 Lyon (FR); Boulet, Michel, F-95240 Cormeilles en Parisis (FR); Demonte, Daniel, F-01140 Saint Etienne sur la Chalarolle (FR)
(74) Mandataire: Bouget, Lucien

(56) Documents cités:
- EP-A- 0 152 361
- EP-A- 0 299 703
- GB-A- 734 702

## Description

L'invention concerne un procédé et un dispositif de mesure de la température du fluide de refroidissement primaire d'un réacteur nucléaire.

Les réacteurs nucléaires tels que les réacteurs nucléaires refroidis par de l'eau sous pression comportent une cuve dans laquelle est disposé le coeur du réacteur constitué par des assemblages combustibles et un circuit primaire comportant au moins une boucle sur laquelle est disposé un générateur de vapeur, à l'intérieur duquel le fluide de refroidissement primaire du réacteur assure l'échauffement et la vaporisation d'eau d'alimentation. Chacune des boucles du circuit primaire comporte des tuyauteries de grand diamètre et de forte épaisseur dans lesquelles circule le fluide de refroidissement primaire. L'une des tuyauteries, ou branche chaude, relie la cuve au générateur de vapeur et assure le transfert du fluide primaire échauffé au contact du coeur dans la partie primaire du générateur de vapeur.

Une autre tuyauterie, ou branche froide, assure le retour du fluide de refroidissement dans la cuve, après son passage dans le générateur de vapeur.

Pour assurer la conduite et le contrôle de fonctionnement des réacteurs nucléaires, il est nécessaire de mesurer la température du fluide primaire qui doit être maintenue impérativement dans un intervalle prédéterminé, pour assurer un fonctionnement satisfaisant du réacteur nucléaire.

L'un des procédés les plus couramment utilisés consiste à prélever du fluide de refroidissement dans différentes branches du circuit primaire, à mélanger les prélèvements obtenus et à effectuer des mesures de température sur les prélèvements de fluide après leur mélange. Ces mesures de température sont effectuées sur les conduites de prélèvement ou dans des collecteurs situés, en des points éloignés des tuyauteries primaires.

Le circuit de prélèvement comporte des tuyauteries de petit diamètre dont la longueur totale peut être de l'ordre de 60 m. En outre, le circuit de prélèvement est complexe et comporte de nombreuses vannes et clapets au niveau desquels peuvent se produire des fuites entraînant une contamination de l'environnement du réacteur nucléaire. On doit alors mettre en oeuvre des procédures de décontamination qui peuvent s'avérer longues et coûteuses.

En outre, les opérateurs de maintenance qui interviennent sur le circuit de prélèvement peuvent être soumis à un taux d'irradiation élevé.

On connaît également des dispositifs de mesure de la température d'un fluide de refroidissement à l'intérieur des tuyauteries primaires qui comportent une sonde dont le corps de support traverse la paroi de la tuyauterie primaire. Ces dispositifs appelés écopes peuvent comporter un élément en forme de doigt de gant pénétrant à l'intérieur de la canalisation primaire à l'intérieur duquel est placée la sonde de mesure de température. Le doigt de gant est percé dans sa partie disposée à l'intérieur de la tuyauterie primaire, de manière que le fluide de refroidissement puisse circuler au contact de la sonde.

La température du fluide de refroidissement d'un réacteur nucléaire n'est pas homogène dans les différentes sections des tuyauteries primaires et en particulier dans les branches chaudes où il se produit une stratification de ce fluide de refroidissement.

Les procédés de mesure de la température du fluide de refroidissement doivent tenir compte de ces phénomènes pour que les mesures obtenues soient réellement représentatives et permettent d'effectuer un contrôle et une conduite efficaces du réacteur nucléaire.

Dans le EP-A-0.299.703, on a décrit un dispositif de détection de température, dans une conduite qui peut être une conduite primaire d'un réacteur nucléaire, permettant d'effectuer deux mesures de température en chacun des points de mesure. Il est connu de réaliser des prélèvements du liquide dont on mesure la température en au moins trois points répartis à la périphérie d'une section droite de la conduite, de mesurer la température du liquide après mélange des prélèvements et de réintroduire le liquide dans la conduite.

Cependant, les dispositifs de prélèvement et de mesure tels que décrits dans le EP-A-0.299.703 mettent en oeuvre des tuyauteries de longueur importante, autour de la conduite dans laquelle on effectue la mesure, et ces tuyauteries doivent être raccordées à des modules de mesure ou de commande. Les dispositifs sont donc complexes et il existe des risques de fuite des prélèvements à l'extérieur de la conduite.

Il est également difficile de détecter des anomalies de prélèvement de ces dispositifs.

Le but de l'invention est donc de proposer un procédé de mesure de la température du fluide de refroidissement primaire d'un réacteur nucléaire comportant une cuve dans laquelle est disposé le coeur du réacteur et un circuit primaire ayant au moins une boucle sur laquelle est disposé un générateur de vapeur, et qui comporte des tuyauteries dans lesquelles circule le fluide de refroidissement primaire du réacteur, l'une de ces tuyauteries, ou branche chaude, reliant la cuve au générateur de vapeur et une autre tuyauterie, ou branche froide, assurant le retour du fluide de refroidissement provenant du générateur de vapeur dans la cuve, dans lequel on prélève du fluide de refroidissement dans une partie sensiblement horizontale de la branche chaude, en au moins trois points répartis à la périphérie d'une section droite de la branche chaude, de manière que l'un au moins des points de prélèvement ou point de prélèvement inférieur soit situé en-dessous de l'axe de la branche chaude, et on mesure la température de l'eau de refroidissement prélevée en chacun des points de prélèvement à sa sortie de la branche chaude, ce procédé d'une mise en oeuvre simple permettant d'obtenir des mesures de température représentatives en évitant, dans une très large mesure, des risques de fuite et d'irradiation par le fluide de refroidissement.

Dans ce but, on réintroduit le fluide de refroidissement dans la branche chaude, en un point situé dans une position sensiblement opposée diamétralement, par rapport à un point de prélèvement inférieur, sur la section droite de la branche chaude.

L'invention est également relative à un dispositif de mesure permettant de mettre en oeuvre le procédé suivant l'invention.

Afin de bien faire comprendre l'invention, on va maintenant décrire, à titre d'exemple non limitatif, en se référant aux figures jointes en annexe, un mode de réalisation d'un dispositif permettant la mise en oeuvre du procédé suivant l'invention, dans le cas d'un réacteur nucléaire refroidi par de l'eau sous pression.

La figure 1 est une vue en perspective schématique d'un circuit de prélèvement et de mesure de température du fluide primaire d'un réacteur nucléaire à eau sous pression, selon l'art antérieur.

La figure 2 est une vue schématique en élévation latérale d'une partie d'un dispositif permettant la mise en oeuvre du procédé suivant l'invention située sur une branche chaude du réacteur.

La figure 3 est une vue en coupe suivant 3-3 de la figure 2.

La figure 3A est une vue en coupe analogue à la figure 3 d'une partie du dispositif située sur une branche froide du réacteur.

La figure 4 est une vue en coupe axiale d'un élément de mesure de la température du fluide de refroidissement utilisé dans le dispositif suivant l'invention.

La figure 5 est une vue en coupe axiale d'un élément permettant la réintroduction du fluide de refroidissement dans une tuyauterie primaire, dans le cadre de la mise en oeuvre du procédé suivant l'invention.

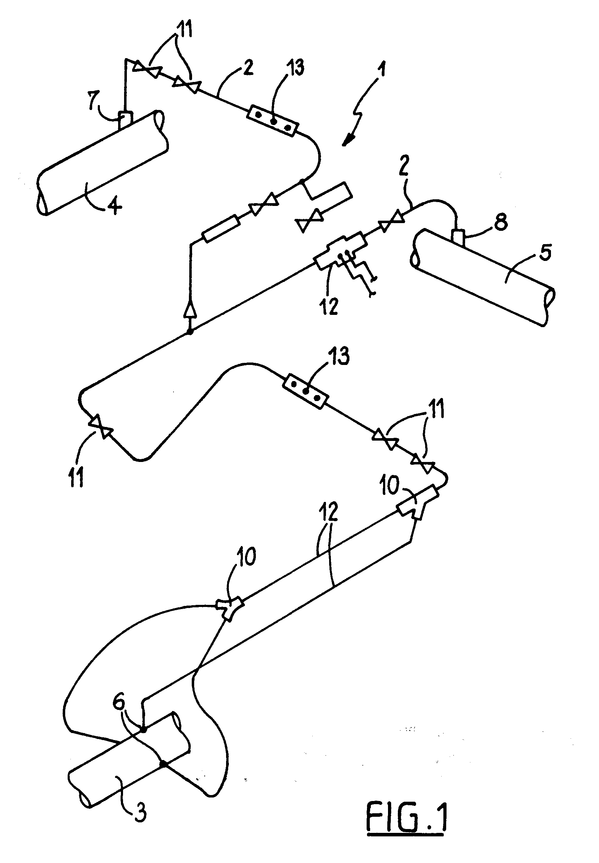

Sur la figure 1, on voit un circuit de prélèvement et de mesure de la température du fluide primaire de refroidissement d'un réacteur nucléaire à eau sous pression, désigné de manière générale par le repère 1.

Le circuit de prélèvement et de mesure comporte des tuyauteries 2 de petit diamètre qui sont reliées à une branche chaude 3, à une branche froide 4, et à une branche intermédiaire 5, appelée branche en U, d'une boucle du circuit primaire du réacteur.

La branche intermédiaire d'un réacteur nucléaire à eau sous pression relie la sortie de la partie primaire du générateur de vapeur à une pompe primaire de circulation du fluide de refroidissement dans la boucle dont la partie de refoulement est reliée à la branche froide 4.

Les tuyauteries 2 du circuit de prélèvement et de mesure sont reliées aux branches 3, 4 et 5, par l'intermédiaire de dispositifs de prélèvement ou de réintroduction du fluide de refroidissement dans le circuit primaire traversant la paroi de la tuyauterie primaire correspondante et généralement désignés sous le nom d'écopes.

Les tuyauteries 2 du circuit de prélèvement 1 sont reliées à la branche chaude par l'intermédiaire de trois écopes 6 réparties autour de la tuyauterie constituant la branche chaude 3.

Les canalisations 2 sont également reliées à la branche froide 4 et à la branche intermédiaire 5, par l'intermédiaire d'écopes 7 et 8 respectivement.

Le circuit de prélèvement et de mesure 1 comporte également des raccords 10, des vannes et clapets 11, des collecteurs 12 et des sondes de mesure 13.

Le circuit de prélèvement et de mesure 1 présente une structure complexe et la longueur totale des canalisations 2, dans le cas d'un réacteur nucléaire à eau sous pression de type connu, peut être de l'ordre de 60 m.

Il en résulte des risques de fuite, de contamination radio-active de l'environnement et d'irradiation des opérateurs chargés de la maintenance du circuit.

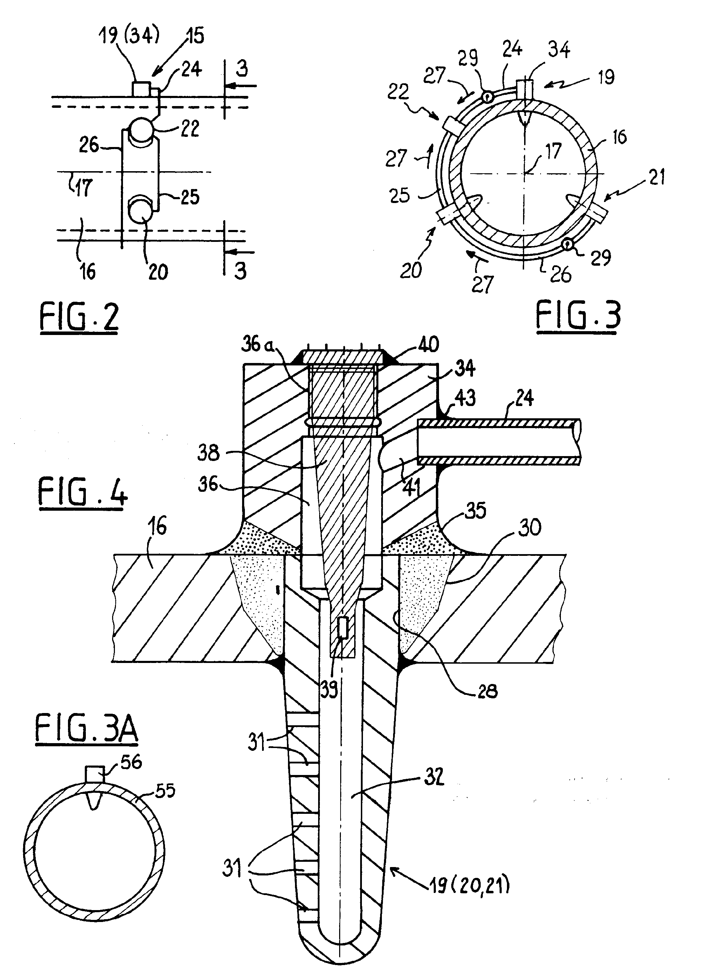

Sur la figure 2, on voit un dispositif de mesure suivant l'invention désigné de manière générale par le repère 15 et disposé sur une partie d'une branche chaude 16 du circuit primaire d'un réacteur nucléaire à eau sous pression ayant un axe 17 sensiblement horizontal.

Comme il est visible sur les figures 2 et 3, le dispositif de mesure 15 comporte trois écopes de prélèvement de fluide de refroidissement 19, 20, 21 et un élément de réintroduction 22 du fluide de refroidissement prélevé dans la tuyauterie primaire 16.

Les écopes de prélèvement 19, 20 et 21 sont disposées à 120° autour de l'axe 17 de la tuyauterie 16, dans une section droite sensiblement verticale de cette tuyauterie.

Les écopes 20 et 21 sont disposées en-dessous de l'axe 17 de la tuyauterie 16 et l'écope 19, à la partie supérieure de la section droite de la tuyauterie 16.

Les écopes 19, 20 et 21 sont équipées de sondes de mesure de température, comme il sera expliqué plus loin.

Le dispositif de réintroduction 22 est placé dans une position diamétralement opposée par rapport à l'écope 21 située en-dessous de l'axe de la tuyauterie 16 et au voisinage de sa partie inférieure.

Chacune des écopes 19, 20, 21 est reliée à l'élément de réintroduction 22 par l'intermédiaire d'une tuyauterie de petit diamètre, respectivement 24, 25 et 26.

L'eau prélevée au niveau des écopes 19, 20 et 21 circule à l'extérieur de la canalisation 16 dans les tuyauteries 24, 25 et 26, pour être réintroduite dans la tuyauterie 16 par l'élément 22, comme indiqué par les flèches 27 représentées sur la figure 3.

L'ensemble du dispositif 15 présentant la forme d'une portion d'anneau est disposé autour de la tuyauterie 16.

Sur la figure 4, on voit une écope telle que 19 fixée dans une ouverture 28 traversant la paroi de la tuyauterie 16. L'écope 19 en forme de doigt de gant est fixée par une soudure 30 dans la paroi de la tuyauterie 16.

L'écope 19 est percée, dans sa partie située à l'intérieur de la tuyauterie 16, par des ouvertures 31 débouchant dans le canal central 32 de direction axiale.

Un bossage 34 est fixé sur la surface externe de la tuyauterie 16, par une soudure 35, de manière que l'alésage interne 36 du bossage 34 se trouve dans le prolongement de l'alésage 32 de l'écope 19.

L'alésage du bossage 34 et la partie supérieure de l'alésage 32 sont usinés de manière à recevoir le support 38 d'une sonde de mesure de température 39.

La partie supérieure 36a de l'alésage 36 est taraudée de manière à recevoir une partie filetée du support 38 qui est vissée à l'intérieur de la partie taraudée 36a de l'alésage 36.

Une soudure 40 permet d'assurer l'étanchéité entre le support 38 et le bossage 34.

Le bossage 34 est également percé pour constituer un canal 41 débouchant dans l'alésage 36 et un logement recevant l'extrémité de la tuyauterie 24 du dispositif 15 qui est fixée par une soudure 43 sur le bossage 34 et qui est mise en communication par le canal 41 avec l'alésage 36.

Les écopes 20 et 21 sont constituées de la même manière que l'écope 19 et comportent une partie en forme de doigt de gant traversant la paroi de la canalisation 16 et un bossage de raccordement sur lequel sont fixées respectivement la tuyauterie 25 et la tuyauterie 26.

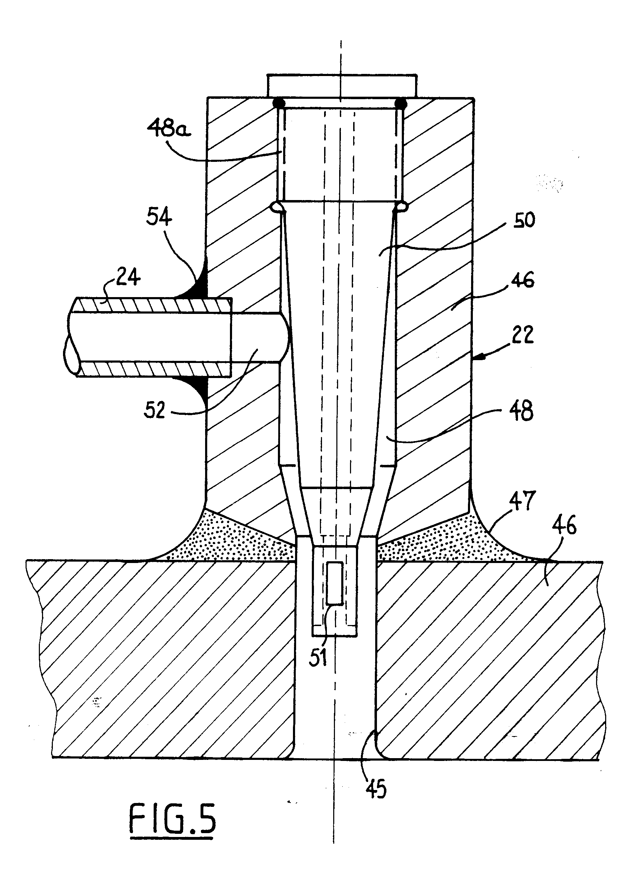

Sur la figure 5, on voit l'élément 22 de réintroduction de l'eau de refroidissement dans la tuyauterie primaire 16 constituant la branche chaude. La paroi de la tuyauterie 16 est traversée par une ouverture 45 et l'élément 22 de réintroduction de l'eau de refroidissement est constitué par un bossage 46 fixé par une soudure 47 sur la surface externe de la tuyauterie 16 et comportant un alésage 48 disposé dans le prolongement de l'alésage 45 traversant la paroi de la tuyauterie 16.

L'alésage 48 est usiné à un diamètre supérieur au diamètre de l'ouverture 45 et comporte une partie taraudée 48a, de manière à pouvoir recevoir un support de sonde 50 disposé suivant toute la longueur de l'alésage 48 et comportant une partie d'extrémité à diamètre réduit sur laquelle est fixée une sonde de température 51 légèrement saillante à l'intérieur de l'ouverture 45.

Le support de sonde 50 comporte une partie d'extrémité filetée qui est engagée par vissage dans l'ouverture taraudée 48a et deux parties tronconiques joignant sa partie d'extrémité filetée à son extrémité à diamètre réduit.

Le support 50 est engagé par vissage dans l'alésage 48 et fixé de manière étanche sur l'extrémité du bossage 46 par un cordon de soudure. L'étanchéité entre le support de sonde 50 et le bossage 46 pourrait être également assurée grâce à un joint.

Le bossage 46 est également traversé par trois canaux disposés sensiblement à 120° autour de son axe, tel que le canal 52, débouchant dans l'alésage 48, dans un espace ménagé dans cet alésage, à la périphérie d'une partie tronconique du support 50.

Au niveau de chacun des canaux 52 est fixée l'extrémité d'une tuyauterie telle que 24 ou 25 ou 26 joignant l'une des écopes à l'élément 22 de réintroduction de l'eau de refroidissement dans la canalisation primaire.

Chacune des tuyauteries telles que 24 est fixée de manière étanche sur le bossage 46 par une soudure telle que 54.

Le support de sonde 50 pourrait être éventuellement remplacé par un bouchon de fermeture de la partie de l'alésage 48 situé au-dessus du canal 52 fixé par vissage et par soudage sur le bossage 46.

Les sondes de température telles que 39 disposées dans les écopes 19, 20 et 21 et la sonde de température 51 associée au bossage de réintroduction d'eau sous pression 46 sont reliées par l'intermédiaire de conducteurs électriques traversant les corps de sonde correspondants, à un module de traitement des signaux des sondes disposé dans la salle de commande du réacteur. Les signaux provenant des sondes et représentatifs de la température de l'eau prélevée au niveau des écopes 19, 20 et 21 ou de la température de l'eau de refroidissement réintroduite dans la tuyauterie primaire 16 au niveau de l'élément de réintroduction 22 sont recueillis par le module de traitement qui permet d'obtenir des valeurs représentatives de la température de l'eau de refroidissement du circuit primaire.

On calcule la moyenne des trois valeurs obtenues à partir des sondes 39, ce qui permet d'obtenir et d'afficher une valeur de la température de l'eau de refroidissement dans la branche chaude, en éliminant une partie des effets de stratification de l'eau de refroidissement dans la branche chaude, susceptibles d'entraîner des erreurs et des perturbations des mesures.

La température moyenne obtenue par les moyens de calcul électroniques du module peut être comparée à la température obtenue à partir de la sonde 51 qui correspond à la température moyenne réelle du fluide réintroduit dans la tuyauterie primaire 16 par l'intermédiaire des tuyauteries 24, 25 et 26 et du bossage 46. En effet, dans l'alésage 48 du bossage 46, se produit un certain mélange des quantités d'eau prélevée au niveau de chacune des écopes 19, 20 et 21. La température mesurée par la sonde 51 correspond donc à la température moyenne de l'eau de refroidissement réintroduite dans la canalisation 16.

Cette comparaison permet en particulier de déceler toute anomalie de fonctionnement du dispositif 15, dans le cas où un écart important existe entre les deux valeurs moyennes obtenues.

Des débitmètres tels que le débitmètre 29 disposés sur chacune des canalisations 24, 25 et 26 permettent de vérifier que le fluide circule correctement dans les canalisations du dispositif de mesure 15.

Le dispositif 15 permet donc de réaliser un certain mélange et une certaine homogénéisation du fluide de refroidissement, de manière à obtenir une valeur représentative de la température du fluide primaire. Ce mélange et cette homogénéisation sont nécessaires, dans la mesure où il se produit une stratification importante du fluide de refroidissement dans la branche chaude 16 du circuit primaire.

Dans le cas d'une branche froide ou d'une branche intermédiaire telle que la branche 55 représentée sur la figure 3A, la mesure de température de l'eau de refroidissement du circuit primaire peut être effectuée en utilisant une seule sonde de température disposée dans une écope 56 présentant des ouvertures de passage de l'eau de refroidissement dans sa partie disposée à l'intérieur de la tuyauterie 55 ou éventuellement plusieurs sondes alignées à la partie supérieure de la tuyauterie.

Les valeurs fournies par cette ou ces sondes sont également traitées, affichées et prises en compte dans la salle de commande du réacteur.

En effet, dans le cas des branches froide et intermédiaire, il ne se produit pas une stratification importante du fluide, de sorte qu'une mesure de température dans la partie supérieure de la tuyauterie est suffisante pour obtenir une valeur représentative.

La sonde 51 de l'élément de réintroduction 22 de l'eau de refroidissement peut être utilisée comme sonde de secours, dans le cas où l'une des sondes associée à une écope 19, 20 ou 21 mesurant la température de sortie du fluide de refroidissement serait défaillante.

Dans le cas où le bossage 46 de l'élément de réintroduction 22 de l'eau de refroidissement est fermé par un bouchon, l'élément 22 ne comportant pas alors de sonde de température, le circuit constitué par les tuyauteries 24, 25 et 26 sert uniquement à assurer un bon mélange du fluide au niveau des trois sondes disposées dans les écopes 19, 20 et 21, sur la sortie de l'eau de refroidissement.

Dans tous les cas, le dispositif suivant l'invention permet de réaliser de manière simple, au voisinage des tuyauteries primaires, la mesure de la température de l'eau de refroidissement du réacteur, en utilisant un dispositif de faible encombrement avec des risques réduits de fuite de liquide de refroidissement et de contamination de l'environnement du réacteur et du personnel de maintenance.

La disposition des écopes munies de sondes de température et de l'élément de réintroduction du fluide dans la tuyauterie primaire peut être différente de celle qui a été décrite et représentée.

Les écopes et l'élément de réintroduction du fluide peuvent également présenter une structure différente de celle qui a été décrite et représentée.

Les signaux de mesure provenant des sondes disposées sur la branche chaude, sur la branche froide ou sur la branche intermédiaire peuvent être traités de toute manière connue de l'état de la technique, pour être affichés ou pour donner lieu au déclenchement d'alarmes.

L'invention s'applique non seulement aux réacteurs nucléaires à eau sous pression mais encore à tout réacteur nucléaire comportant un fluide de refroidissement primaire circulant dans des tuyauteries de grand diamètre dont certaines parties au moins présentent une disposition sensiblement horizontale.

## Revendications

1. Procédé de mesure de la température du fluide de refroidissement primaire d'un réacteur nucléaire comportant une cuve dans laquelle est disposé le coeur du réacteur et un circuit primaire ayant au moins une boucle sur laquelle est disposé un générateur de vapeur, et qui comporte des tuyauteries (16, 55) dans lesquelles circule le fluide de refroidissement primaire du réacteur, l'une de ces tuyauteries (16), ou branche chaude, reliant la cuve au générateur de vapeur et une autre tuyauterie, ou branche froide, (55) assurant le retour du fluide de refroidissement provenant du générateur de vapeur dans la cuve, dans lequel on prélève du fluide de refroidissement dans une partie sensiblement horizontale de la branche chaude (16), en au moins trois points (19, 20, 21) répartis à la périphérie d'une section droite de la branche chaude (16), de manière que l'un au moins des points de prélèvement (20, 21) ou point de prélèvement inférieur soit situé en-dessous de l'axe (17) de la branche chaude (16), et on mesure la température de l'eau de refroidissement prélevée en chacun des points de prélèvement (19, 20, 21) à sa sortie de la branche chaude (16), caractérisé par le fait qu'on réintroduit le fluide de refroidissement dans la branche chaude (16), en un point (22) situé dans une position sensiblement opposée diamétralement, par rapport à un des points de prélèvement inférieur (20, 21), sur la section droite de la branche chaude (16).

2. Procédé suivant la revendication 1, caractérisé par le fait qu'on prélève le fluide de refroidissement en trois points (19, 20, 21) disposés à 120° les uns des autres autour de l'axe (17) de la branche chaude (16), dans une section droite de cette branche chaude (16).

3. Procédé suivant l'une quelconque des revendications 1 et 2, caractérisé par le fait qu'on mesure de plus la température du fluide de refroidissement en un point (56) situé au voisinage de la partie supérieure de la branche froide (55) du circuit primaire.

4. Procédé suivant l'une quelconque des revendications 1 et 3, caractérisé par le fait qu'on calcule par des moyens électroniques la moyenne des températures mesurées en chacun des points de prélèvement (19, 20, 21) de la branche chaude (16).

5. Procédé suivant l'une quelconque des revendications 1 à 4, caractérisé par le fait qu'on mesure de plus la température de l'eau de refroidissement réintroduite dans la branche chaude (16), au point situé dans une position sensiblement diamétralement opposée par rapport à l'un des points de prélèvement inférieur (20, 21) et qu'on compare la température de l'eau de refroidissement réintroduite au point de réintroduction (22), avec la moyenne des températures mesurées aux points de prélèvement (19, 20, 21).

6. Dispositif de mesure de la température du fluide de refroidissement primaire d'un réacteur nucléaire comportant une cuve dans laquelle est disposé le coeur du réacteur et un circuit primaire ayant au moins une boucle sur laquelle est disposé un générateur de vapeur, et qui comporte des tuyauteries (16, 55) dans lesquelles circule le fluide de refroidissement primaire du réacteur, l'une des tuyauteries ou branche chaude (16) reliant la cuve au générateur de vapeur et une autre tuyauterie ou branche froide (55) assurant le retour du fluide de refroidissement provenant du générateur de vapeur, dans la cuve, comportant au moins trois dispositifs de prélèvement et de mesure de température du fluide de refroidissement traversant la paroi d'une partie sensiblement horizontale de la branche chaude (16), répartis à la périphérie de cette section droite, de manière que l'un au moins des dispositifs de prélèvement (20, 21) soit situé en-dessous de l'axe (17) de la branche chaude (16), caractérisé par le fait qu'il comporte en outre un élément (22) de réintroduction de fluide de refroidissement dans la branche chaude (16) disposé dans une position sensiblement opposée diamétralement par rapport à l'un des dispositifs de prélèvement situés en-dessous de l'axe (17) de la branche chaude (16) ainsi que des tuyauteries (24, 25, 26) reliant chacun des dispositifs de prélèvement (19, 20, 21) à l'élément de réintroduction (22).

7. Dispositif suivant la revendication 6, caractérisé par le fait que chacun des dispositifs de prélèvement (19, 20, 21) est constitué sous la forme d'une écope comportant une partie en forme de doigt de gant fixée dans une ouverture (28) traversant la paroi de la branche chaude (16) et présentant dans sa partie située à l'intérieur de la branche chaude (16), des ouvertures (31) traversant sa paroi et débouchant dans un canal central (32) ainsi qu'un bossage (34) comportant un alésage intérieur (36) communiquant avec le canal central (32) de la partie en forme de doigt de gant dans lequel est fixée une sonde de mesure de température (39) portée par un support (38) assurant la fermeture étanche de l'alésage du bossage (34) fixé sur la surface extérieure de la branche chaude (16), le bossage comportant de plus un canal (41) débouchant dans son alésage (36) et mis en communication avec une tuyauterie (24) reliée à son autre extrémité à l'élément de réintroduction (22).

8. Dispositif suivant l'une quelconque des revendications 6 et 7, caractérisé par le fait que l'élément de réintroduction (22) est constitué par un bossage (46) fixé sur la surface extérieure de la branche chaude (16) au niveau d'une ouverture (45) traversant la paroi de la branche chaude (16) et comportant un alésage (48) communiquant avec l'ouverture (45) dans laquelle est fixée une sonde de température (51) sur un support (50) assurant la fermeture étanche vers l'extérieur de l'alésage (48) du bossage (46), le bossage (46) comportant de plus au moins trois canaux (52) de direction radiale débouchant dans l'alésage (48) du bossage (46) en communication chacun avec une tuyauterie (24, 25, 26) reliée à un dispositif de prélèvement (19, 20, 21).

9. Dispositif suivant la revendication 8, caractérisé par le fait que le support de sonde (50) disposé dans l'alésage (48) du bossage (46) de l'élément de réintroduction (22) est remplacé par un bouchon de fermeture de l'alésage (48) du bossage (46).

## Patentansprüche

1. Verfahren zum Messen der Temperatur des primären Kühlfluides eines Kernreaktors, der eine Wanne, in der der Kern des Reaktors angeordnet ist, und einen Primärkreis mit wenigstens einem Kreislauf, in dem ein Dampferzeuger angeordnet ist, aufweist, und der Rohrleitungen (16, 55) aufweist, in denen das primäre Kühlfluid des Reaktors umläuft, wobei eine der Rohrleitungen (16), oder der heiße Zweig, die Wanne mit dem Dampferzeuger verbindet und eine weitere Rohrleitung, oder der kalte Zweig, (55), die Rückleitung des Kühlfluides gewährleistet, das vom Dampferzeuger in der Wanne geliefert wird, bei dem man das Kühlfluid in einem im wesentlichen horizontalen Abschnitt des heißen Zweiges (16) an wenigstens drei Punkten (19, 20, 21) entnimmt, die am Umfang eines Querschnittes des heißen Zweiges (16) verteilt sind, derart, daß wenigstens einer der Entnahmepunkte (20, 21) oder der niedrigste Entnahmepunkt unterhalb der Achse (17) des heißen Zweiges (16) angeordnet ist, und man die Temperatur des entnommenen Kühlwassers an jedem der Entnahmepunkte (19, 20, 21) bei seinem Austritt aus dem heißen Zweig (16) mißt, dadurch gekennzeichnet, daß man das Kühlfluid in den heißen Zweig (16) wiedereinführt, an einem Punkt (22), der an einer im wesentlichen diametral gegenüberliegenden Stelle in bezug auf einen der niedrigen Entnahmepunkte (20, 21) auf dem Querschnitt des heißen Zweiges (16) liegt.

2. Verfahren nach Anspruch 1, dadurch gekennzeichnet, daß man das Kühlfluid an drei Punkten (19, 20, 21) entnimmt, die um 120° zueinander um die Achse (17) des heißen Zweiges (16) in einem Querschnitt dieses heißen Zweiges (16) versetzt angeordnet sind.

3. Verfahren nach einem der Ansprüche 1 und 2, dadurch gekennzeichnet, daß zusätzlich die Temperatur des Kühlfluides an einem Punkt (56) liegt, der benachbart dem oberen Teil des kalten Zweiges (55) des Primärkreises liegt.

4. Verfahren nach einem der Ansprüche 1 bis 3, dadurch gekennzeichnet, daß man durch elektronische Recheneinrichtungen den Mittelwert der Temperaturen berechnet, die an jedem der Entnahmepunkte (19, 20, 21) des heißen Zweiges (16) gemessen worden sind.

5. Verfahren nach einem der Ansprüche 1 bis 4, dadurch gekennzeichnet, daß man weiterhin die Temperatur des in den heißen Zweig (16) wiedereingeleiteten Kühlwassers mißt, an einem Punkt, der an einer Stelle im wesentlichen diametral gegenüberliegend in bezug auf einen der niedrigen Entnahmepunkte (20, 21) gelegen ist, und daß man die Temperatur des am Wiedereinleitungspunkt (22) wiedereingeleiteten Kühlwassers mit dem Mittelwert der Temperaturen vergleicht, die an den Entnahmepunkten (19, 20, 21) gemessen worden sind.

6. Vorrichtung zum Messen der Temperatur des primären Kühlfluides eines Kernreaktors, der eine Wanne, in der der Kern des Reaktors angeordnet ist, und einen Primärkreis mit wenigstens einem Kreislauf, in dem ein Dampferzeuger angeordnet ist, aufweist, und der Rohrleitungen (16, 55) aufweist, in denen das primäre Kühlfluid des Reaktors umläuft, wobei eine der Rohrleitungen oder der heiße Zweig (16) die Wanne mit dem Dampferzeuger verbindet und eine weitere Rohrleitung oder der kalte Zweig (55) die Rückleitung des Kühlfluides gewährleistet, das vom Dampferzeuger kommt, in die Wanne, mit wenigstens drei Vorrichtungen für die Entnahme und für die Messung der Temperatur des Kühlfluides, die die Wand eines im wesentlichen horizontalen Teiles des heißen Zweiges (16) durchqueren, um den Umfang dieses Querschnittes verteilt, derart, daß wenigstens eine der Entnahmevorrichtungen (20, 21) unterhalb der Achse (17) des heißen Zweiges (16) angeordnet ist, dadurch gekennzeichnet, daß sie weiterhin ein Element (22) für die Wiedereinleitung von Kühlfluid in den heißen Zweig (16) aufweist, angeordnet an einer Stelle, die im wesentlichen diametral gegenüberliegend in bezug auf eine der Entnahmevorrichtungen angeordnet ist, die unterhalb der Achse (17) des heißen Zweiges (16) liegt, so daß die Rohrleitungen (24, 25, 26) jede der Entnahmevorrichtungen (19, 20, 21) mit dem Element (22) für die Wiedereinleitung verbinden.

7. Vorrichtung nach Anspruch 6, dadurch gekennzeichnet, daß jede der Entnahmevorrichtungen (19, 20, 21) in Form einer Abschöpfstelle gebildet ist, die einen Abschnitt in Form eines Handschuhfingers aufweist, der in einer Öffnung (28) festgelegt ist, welche die Wand des heißen Zweiges (16) durchquert, und in seinem im Inneren des heißen Zweiges (16) gelegenen Abschnitt Öffnungen (31) aufweist, die seine Wand durchqueren und in einen Mittelkanal (32) münden, so daß ein Vorsprung (34), der eine innere Bohrung (36), welche mit dem Mittelkanal (32) des Teiles in Form des Handschuhfingers kommuniziert, aufweist, in der eine Sonde (29) zum Messen der Temperatur befestigt ist, getragen von einem Träger (38) der den dichten Abschluß der Bohrung des Vorsprunges 34, der auf der Außenfläche des heißen Zweiges (16) befestigt ist, gewährleistet, wobei der Vorsprung weiterhin einen Kanal (41) aufweist, der in seine Bohrung (36) mündet und mit einer Rohrleitung (24) in Kommunikation gebracht ist, die mit ihrem anderen Ende mit dem Element (22) für die Wiedereinleitung verbunden ist.

8. Vorrichtung nach einem der Ansprüche 6 und 7, dadurch gekennzeichnet, daß das Element (22) für die Wiedereinleitung durch einen Vorsprung (46) gebildet ist, der auf der Außenfläche des heißen Zweiges (16) auf Höhe einer Öffnung (45) befestigt ist, die die Wand des heißen Zweiges (16) durchquert, und eine Bohrung (48) aufweist, die mit der Öffnung (45) kommuniziert, in welcher eine Temperatursonde (51) auf einem Träger (50) angebracht ist, der den dichten Abschluß gegenüber dem Außenraum der Bohrung (48) des Vorsprunges (46) gewährleistet, wobei der Vorsprung (46) weiterhin wenigstens drei Kanäle (52) in radialer Richtung aufweist, die in die Bohrung (48) des Vorsprunges (46) münden, wobei jeder in Kommunikation mit einer Rohrleitung (24, 25, 26) steht, die mit einer Entnahmevorrichtung (19, 20, 21) verbunden ist.

9. Vorrichtung nach Anspruch 8, dadurch gekennzeichnet, daß der Sondenträger (50), der in einer Bohrung (48) des Vorsprunges (46) des Elementes (22) für die Wiedereinleitung angeordnet ist, durch einen Verschlußstopfen für die Bohrung (48) des Vorsprunges (46) ersetzt ist.

## Claims

1. A method for measuring the temperature of the primary coolant fluid of a nuclear reactor comprising a vessel wherein the core of the reactor is disposed, and a primary circuit having at least one loop wherein a steam generator is disposed, and which includes pipes (16, 55) wherein there circulates the primary coolant fluid of the reactor, one of these pipes (16) or hot branch (16) connecting the vessel to the steam generator, and another pipe or cold branch (55) ensuring the return of the coolant fluid coming from the steam generator into the vessel, wherein some coolant fluid is drawn off in a substantially horizontal portion of the hot branch (16) at at least three points (19, 20, 21) distributed over the circumference of a cross-section of the hot branch (16) in such a way that at least one of the drawing-off points (20, 21) or lower drawing-off point is situated below the axis (17) of the hot branch (16), and the temperature of the coolant water drawn off at each of the drawing-off points (19, 20, 21) is measured on its emergence from the hot branch (16), characterized in that the coolant fluid is reintroduced into the hot branch (16) at a point (22) that is situated in a position substantially diametrically opposed relative to one of the lower drawing-off points (20, 21) on the cross-section of the hot branch (16).

2. A method according to claim 1, characterized in that the coolant fluid is drawn off at three points (19, 20, 21) disposed at 120° with respect to one another round the axis (17) of the hot branch (16) in a cross-section of this hot branch (16).

3. A method according to any one of claims 1 and 2, characterized in that the temperature of the coolant fluid is, moreover, measured at a point (56) situated in the vicinity of the upper portion of the cold branch (55) of the primary circuit.

4. A method according to any one of claims 1 and 3, characterized in that the average of the temperatures measured at each of the drawing-off points (19, 20, 21) of the hot branch (16) is calculated by electronic means.

5. A method according to any one of claims 1 to 4, characterized in that one measures, moreover, the temperature of the coolant water reintroduced into the hot branch (16) at the point that is situated in a position substantially diametrically opposed relative to one of the lower drawing-off points (20, 21), and that the temperature of the coolant water reintroduced at the reintroduction point (22), is compared with the average of the temperatures measured at the drawing-off points (19, 20, 21).

6. A device for measuring the temperature of the primary coolant fluid of a nuclear reactor comprising a vessel wherein the core of the reactor is disposed, and a primary circuit having at least one loop wherein a steam generator is disposed, and which includes pipes (16, 55) wherein there circulates the primary coolant fluid of the reactor, one of the pipes or hot branch (16) connecting the vessel to the steam generator, and another pipe or cold branch (55) ensuring the return of the coolant fluid coming from the steam generator into the vessel, comprising at least three devices for the drawing-off and for the measurement of the temperature of the coolant fluid, passing through the wall of a substantially horizontal portion of the hot branch (16) distributed over the circumference of this cross-section in such a way that at least one of the drawing-off devices is situated below the axis (17) of the hot branch (16), characterized in that it comprises, moreover, an element (22) for reintroducing the coolant fluid into the hot branch (16) disposed in a position substantially diametrically opposed relative to one of the drawing-off devices situated below the axis (17) of the hot branch (16), as well as pipes (24, 25, 26) connecting each of the drawing-off devices (19, 20, 21) to the reintroducing element (22).

7. A device according to claim 6, characterized in that each of the drawing-off devices (19, 20, 21) is constituted in the form of a scoop, including a part in the shape of a glove finger fixed in an opening (28) passing through the wall of the hot branch (16) and having, in its part situated inside the hot branch (16), openings (31) passing through its wall and leading into a central duct (32), as well as a boss (34) having an internal bore (36) that communicates with the central duct (32) of the glove finger-shaped part, wherein there is fixed a temperature measuring probe (39) carried by a support (38) ensuring the leakproof seal of the bore of the boss (34) fixed on the external surface of the hot branch (16), the boss including, moreover, a duct (41) leading into its bore (36) and placed into communication with a pipe (24) connected at its other end to the reintroduced element (22).

8. A device according to any one of claims 6 and 7, characterized in that the reintroduced element (22) is constituted by a boss (46) fixed on the external surface of the hot branch (16) at the level of an opening (45) passing through the wall of the hot branch (16) and comprising a bore (48) that communicates with the opening (45) wherein there is fixed a temperature probe (51) on a support (50) ensuring the leakproof seal towards the outside of the bore (48) of the boss (46), the boss (46), comprising, moreover, at least three ducts (52) in a radial direction leading into the bore (48) of the boss (46), each communicating with a pipe (24, 25, 26) connected to a drawing-off device (19, 20, 21).

9. A device according to claim 8, characterized in that the support for the probe (50) disposed in the bore (48) of the boss (46) of the reintroducing element (22) is replaced by a plug for closing the bore (48) of the boss (46).
